# EUROPEAN PATENT APPLICATION

(11) **EP 0 570 641 A1**
(43) Date of publication of application: **24.11.1993**
(21) Application number: 92309700.0
(22) Date of filing: 23.10.1992
(51) Int. Cl.: B21D 39/06

(54) **Method of forming a tube to header joint**

(30) Priority: 19.05.1992 US 885547
(71) Applicant: MODINE MANUFACTURING COMPANY, Racine Wisconsin 53403 (US)
(72) Inventor: Cooley, Robert S., Oconomowoc, Wisconsin 53066 (US); Mattson, Norman E., Racine, Wisconsin 53403 (US)
(74) Representative: Parry, Christopher Stephen

(57) **Abstract**

A method of forming a tube (12) to header (18) joint (86) includes the steps of inserting and open end (14) of a tube (12) into a similarly shaped flanged hole (16) in a header plate (18) so that the end (14) of the tube (12) extends somewhat beyond the flange (20). The tube (12) and header plate (18) are then secured against substantial relative movement. A first force (78) is applied to the tube end (14) in the direction of the header plate (18) to cause the tube end (14) to be directed toward the header plate (18) on a side of the flange (20) remote from the hole (16). A second force (82) is then applied to the tube end (14) in the direction of the header plate (18) to cause the flange (20) to fold tightly over the tube end (14) to capture the same.

## Description

The present invention is directed toward heat exchangers and more particularly toward a method of making a tube to header joint in a heat exchanger and a tube to header joint structure.

Heat exchangers typically include a plurality of heat exchange tubes connected by fluid tight joints to a header plate. Numerous methods have been employed for making tube to header joints in such heat exchangers. These range from brazing, to welding, to the use of adhesives, to physically deforming the tube and header plate to unite them.

Forming water tight seals by welding and brazing can be difficult, particularly where the tubes or headers are aluminum coated steel, because the heat of brazing and welding can melt the protective aluminum coating and increase the potential for corrosion at the joint. Adhesives have been used to eliminate the degradation of the aluminum coating with limited success. However, due to the time it takes many adhesives to cure, their use can be time consuming and costly. In addition, mechanical forces acting on tube to header joints formed by welds or adhesives in the heat exchanger operating environment can cause such tube to header joints to fail.

Various methods have been employed to physically deform tube ends and header plates together to make a tube to header joint. Typically these methods involve deforming the tube end around a packing element or gasket to assure a water tight joint between the tube and header. Representative prior art is disclosed in U.S.S.R. Patent Nos. 1,374,030, 1,035,402 and 1,388,690 and Albers et al., U.S. Patent No. 3,027,142. Other methods teach inserting a tube through a flanged hole in a header plate with the tube end extending slightly beyond the flange. A die then deforms the tube and end flange to unite them. Representative prior art showing this method includes U.S. Patent No. 3,972,371. However, this prior art requires welding to complete the joint.

While methods of making tube to header joints by deforming the tube and header together offer a physically stronger tube to header joint than adhesives or welds alone, they still have several serious problems. Most notably, heat exchange tubes are often relatively long yet thin walled, creating a problem of the side walls buckling under the application of force to the end of the tube to deform it to the header plate. Matsui, Japanese Patent Application No. 58/105,175, teaches the insertion of a mandrel into an end of a drain pipe opposite the end to be joined to prevent compression and buckling of the drain pipe under the force of a punch which deforms the joining end of the drain pipe to unite it with a base pan. However, the method of Matsui is unsuitable for a lengthy tube or a tube having an obstruction inside the tube because a mandrel cannot be inserted into an opposite end of the tube.

The present invention is directed toward overcoming one or more of the problems discussed above.

An exemplary embodiment of the invention contemplates a method of forming a tube to header joint including the steps of inserting an open end of a tube into a similarly shaped flanged hole in a header plate so that the end of the tube extends somewhat beyond the flange. The tube and header plate are then secured against substantial relative movement. A first force is applied to the tube end in the direction of the header plate to cause the tube end to be directed toward the header plate on a side of the flange remote from the hole. A second force is then applied to the tube end in the direction of the header plate to cause the flange to fold tightly over the tube end to capture the same.

Preferably, the first force is applied by a die having an arcuate striking surface. The second force is applied by a die having a substantially planar striking surface.

The tube and header plate are preferably secured against substantial relative movement by inserting a locking insert having a peripheral side wall substantially conforming to an inner surface of the tube into the open end of the tube with its side wall abutting the inner surface of the tube. A first cooperating structure on the locking insert and on the inner surface of the tube is engaged to halt lengthwise insertion of the locking insert. The outer surface of the tube and the header plate are supported with an exterior support having an inner wall substantially conforming to the outer surface of the tube. Second cooperating means on the exterior support and the outer surface of the tube is engaged to halt relative movement between the tube and the exterior support.

In a preferred embodiment, the first cooperating structure includes an enlarged section of the tube adjacent to the tube end and a transverse joining wall between the enlarged section of the tube and the tube. The peripheral side wall of the locking insert has a shoulder which mates with the transverse joining wall to halt lengthwise insertion of the locking insert. The second cooperating structure includes an inner wall of the exterior support frame which has a shoulder which mates with the transverse joining wall.

An alternative embodiment of the present invention is a method of forming a tube to header joint including the steps of inserting an open end of a tube lengthwise into a similar shaped flanged hole in a header plate so that the tube extends somewhat past the flange. A locking insert having a peripheral side wall substantially conforming to an inner surface of the tube side wall is inserted into the open end of the tube with its peripheral side wall abutting the inner surface of the tube side wall. First cooperating means on a locking insert and on the inner surface of the tube side wall are engaged to halt lengthwise insertion of the locking insert into the tube. The outer surface of the tube and header plate are supported within an exterior support. The exterior support has an inner wall substantially conforming to the outer surface of the tube side wall. A second cooperating structure on the exterior support and on the outer surface of the tube are engaged to halt relative movement between the tube and the exterior support. The tube end is struck in the direction of the header plate, with a die forming a clinched joint between the tube and header.

Yet another embodiment of the invention contemplates a tube to header plate joint for joining an aluminum clad steel tube and a header plate. The joint includes a header plate with a tube receiving hole having a peripheral flange. An elongate tube having a side wall and an open end with an outer periphery substantially conforming to the periphery of the tube receiving hole is inserted lengthwise through the tube receiving hole. The tube side wall and peripheral flange are folded one over another forming alternating layers of tube side wall and flange transverse the side wall of the tube and parallel to the header plate.

The method of making a tube to header joint as claimed herein forms a liquid tight joint between an aluminum coated steel tube and a header without damaging the aluminum coating of the steel tube. Thus, the method promotes corrosion resistant joints by maintaining the integrity of a protective aluminized coating on the tubes. In addition, a joint formed by the claimed method is exceptionally durable as compared to welded or adhesive tube to header joints. The method of making a tube to header joint as claimed herein permits formation of a clinched tube to header connection without buckling of the tube side walls. Because the locking insert can be inserted into and withdrawn from the open end of the tube, protection against buckling can be provided notwithstanding obstructions in the tube which prevent insertion of a mandrel from an end of the tube opposite the open end of the tube wherein a clinched tube to header joint is formed. Moreover, the claimed method facilitates inexpensive and efficient manufacture of fluid tight and durable tube to header joints.

Embodiments of the invention are described below with reference to the accompanying drawings in which:
FIG. 1 is a sectional view of an open end of a tube inserted into a flanged hole in a header plate;
FIG. 2 is a sectional view showing an external support around the outer surface of the tube and a locking insert being inserted therein;
FIG. 3 is a sectional view showing the locking insert engaging a cooperating surface to stop lengthwise insertion of the locking insert into the tube;
FIG. 4 is a sectional view illustrating a die having an arcuate surface striking the tube end and forming a curled end of the tube;
FIG. 5 is a sectional view illustrating a die with a substantially planar striking surface engaging the curled end of the tube;
FIG. 6 is a sectional view showing a die having a substantially planar striking surface folding the tube end tightly over the flange to form a tube to header joint claimed herein; and
FIG. 7 is an enlarged sectional view of the tube to header joint of FIG. 6.

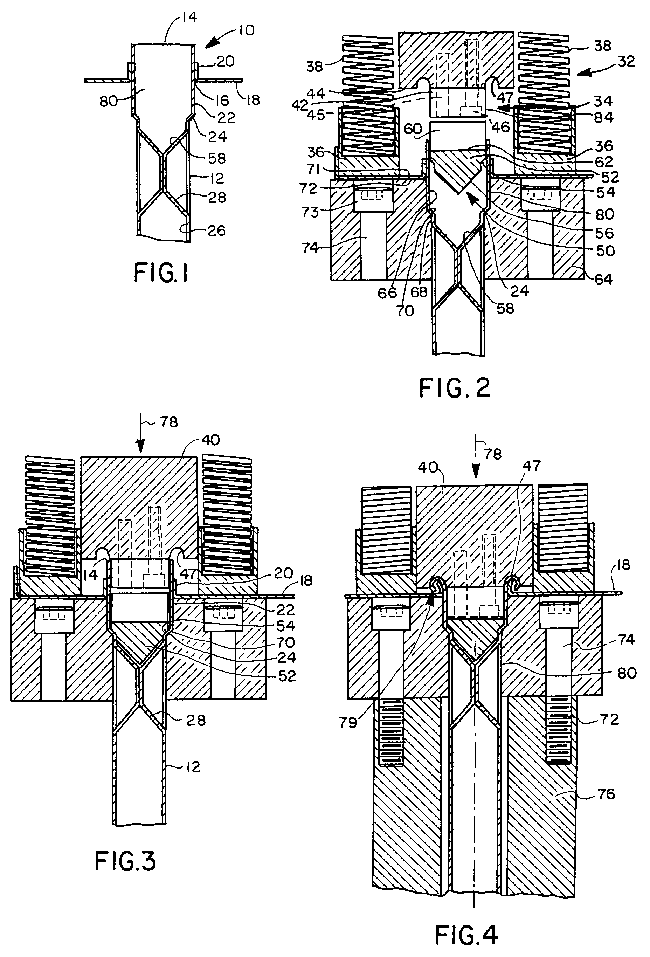

FIG. 1 illustrates a single tube to header plate assembly 10, including a tube 12 having an open end 14 inserted into a hole 16 in a header plate 18. A flange 20 surrounds the periphery of the hole 16. The tube 12 has an enlarged end 22 adjacent the open end 14. A transverse wall 24 joins the enlarged end 22 and the remainder of tube 12. Within an inner surface 26 of the tube 12 is at least one turbulating dimple 28.

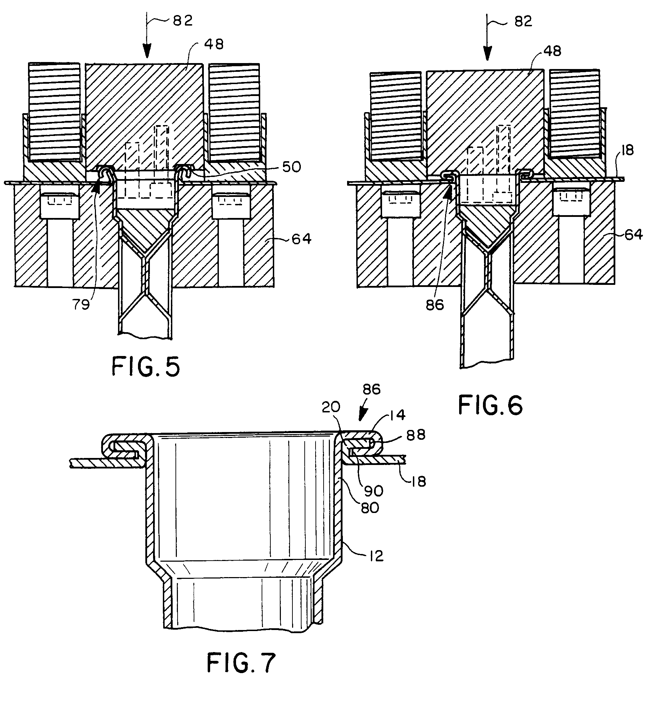

A press 30 (FIG. 2) for applying a force to form a tube to header joint includes a stripper assembly 32 and a die assembly 34. The stripper assembly 32 comprises a stripper block 36 which mates with a number of springs 38. The die assembly 34 includes a curling die block 40 and a male aligning tooth 42 attached to a striking end 44 of the curling die block 40. An alignment dowel 45 along with a bolt 46 maintains the male aligning tooth in a laterally fixed position and the bolt 46 holds the male aligning tooth 42 against the curling die block 40. An arcuate striking surface 47 is provided for forming a curled tube end (see FIGS. 2-4). A flattening die block 48 is identical in all respects to the curling die block 40 except it has a substantially planar striking surface 50 (see FIGS. 5 and 6).

A locking insert 52 has a shoulder 54 configured to mate with the transverse wall 24 of the tube 12. A leading edge 55 of the locking insert 52 is configured to clear a leading surface 56 of the dimple 28. Thus, the peripheral side wall 56 of the locking insert 52 substantially conforms to the inner surface 26 of the tube 12. A female aligning socket 60 is attached to the trailing edge 62 of the locking insert 52. As illustrated in FIGS. 3-6 the female aligning socket 60 is configured to receive the male aligning tooth 42 of the die assembly 34.

An exterior support 64 has an inner wall 66 conforming to the outer surface 68 of the tube 12. The inner wall 66 of the exterior support 64 includes a shoulder 70 which mates with the transverse wall 24 of the tube 12. The support 64 further includes an anvil surface 71 which abuts the underside 72 of the header plate 18. A plurality of cap screws 73 are received in a plurality of bores 74 in the anvil surface 71 of the exterior support 64 and, as seen in FIG. 4, are threaded into columns 76 which maintain the exterior support 64 in a fixed position lengthwise with respect to the tube 12.

The method of making a tube to header joint is best understood with sequential reference to FIGS. 1-6. As a first step the open end 14 of the tube 12 is inserted in the flanged hole 16 of the header plate 18 as illustrated in FIG. 1. The open end of the tube 14 extends somewhat past the flange 20.

The tube and header are then secured against substantial relative movement. This securing is accomplished by inserting the locking insert 52 in the open end 14 of the tube 12 with the side wall 58 in abutment with the inner surface 26 of the tube 12 (See FIG. 2). The locking insert 52 is inserted until the shoulder 54 of the locking insert 52 engages the transverse wall 24 of the tube 12 halting lengthwise insertion of the locking insert 52 into the tube 12 (see FIG. 3). The outer surface 68 of the tube 12 is supported by the exterior support 64. The shoulder 70 of the inner wall 66 of the exterior support 64 engages the transverse wall 24 of the tube 12 to halt relative lengthwise movement between the tube 12 and the exterior support 64. The anvil surface 71 of the external support 64 abuts the underside 72 of the header plate 18.

A force indicated by an arrow 78 is then applied to the open end of 14 of the tube 12 by the arcuate striking surface 47 of the curling die 40 as illustrated in FIGS. 2-4. As the force 78 drives the curling die 40, the male aligning tooth 42 of the die assembly 34 is received in the female aligning socket 60 of the locking insert 52. In this manner the locking insert 52 is prevented from moving laterally relative to the die assembly 34. As seen in FIG. 4, as the arcuate striking surface 47 engages the tube 12 the open end 14 of the tube 12 is caused to curl around the flange 20 toward the header plate on a side of the flange 20 remote from the flanged hole 16, thus forming a curled intermediate joint 79.

As the force 78 is applied in a direction toward the header plate 18 the side wall 80 of the tube 12 is supported against buckling by the exterior support 64, the locking insert 52 and the exterior surface 84 of aligning tooth 42. More particularly, as the force 78 is applied, the exterior surface 58 of the locking insert 52 and the exterior surface 84 of the aligning tooth 42 prevent lateral inward displacement of the side wall 80 of the tube 12, and the inner wall 66 of the exterior support 64 prevents lateral outward deflection of the side wall 80 of the tube 12. Lengthwise deflection of the side walls 80 of the tube 12 is prevented because the force 78 is born by the cooperative interaction between the shoulder 70 of the exterior support 64 and the transverse wall 24 of the tube 12. The columns 76 support the exterior support frame 64 against lengthwise movement under application of the force 78. In addition, the header plate 18 is supported by the anvil surface 71 of the exterior support 64.

After application of the first force 78 a second force indicated by an arrow 82 is applied to the open end 14 of the tube 12 by a press 30 using the flattening die 48 having a substantially planar striking surface 50 (see FIGS. 5 and 6). Upon application of the force 82 in the direction of the header plate 18 the substantially planar striking surface 50 of the die block 48 flattens the curled intermediate joint 79, forming a clinched joint 86 (see FIG. 6). In the same manner described above with respect to application of the first force 78, the second force 82 does not cause buckling of the side wall 80 of the tube 12 by virtue of the interaction between the locking insert 52 and the exterior support 64 with the side wall 80 of the tube 12. Similarly, the anvil surface 71 of the exterior support 64 prevents deformation of the header plate 18.

As seen in FIG. 6, following application of the second force 82 by the flattening die 48 a clinched joint 86 is formed by the tube side wall 80 extending through the hole 16 in the header plate 18 and the flange 20 being folded one over another in alternating layers transverse the side wall 80 of the tube 12 below the header plate 18 and parallel to the header plate 18. As best seen in FIG. 7, the edge 88 of the flange 20 is sandwiched between the tube side wall 80 extending through the hole 16 and the free edge 90 of the tube 12 is sandwiched between the flange 20.

In one preferred application of the above described method of forming a tube to header joint, the tube of the joint structure is an aluminum clad steel tube. The method of forming the tube to header joint and the tube to header joint structure is particularly advantageous with such an aluminum clad steel tube because the integrity of the aluminum cladding is not damaged as can happen with brazing or welding. Thus, particular advantages of the claimed method and joint structure are realized with such tubes.

The claimed method of making a tube to header joint of the present invention prevents lateral deformation and buckling of a tube when forming a tube to header joint. In addition, the claimed method for making a tube to header joint can be employed with tubes having internal structures such as turbulators or a closed end because the locking insert is inserted into and removed from the open end of the tube when the tube to header joint is formed. Moreover, the claimed method yields strong, fluid tight tube to header joints without requiring adhesives, welding or brazing, simplifying heat exchanger construction and lowering costs.

The tube to header joint structure provides a fluid tight joint without disruption to the surface of the tube and header such as removal of protective coatings to prevent corrosion of the tube to header joint. In addition, the physical bonding of the tube to header through the folded joint provides a tube to header joint that can withstand significant forces without failure.

## Claims

1. A method of forming a tube to header joint comprising the steps of:
a) inserting an open end of a tube into a similarly shaped flanged hole in a header plate so that the end of the tube extends somewhat past the flange;
b) securing the tube and header plate against substantial relative movement;
c) applying a first force to the tube end in the direction of the header plate to cause the tube end to be directed toward the header plate on a side of the flange remote from the hole; and
d) applying a second force to the tube end in the direction of the header plate to cause the flange to fold tightly over the tube end to capture the same.

2. The method of forming a tube to header joint of claim 1 wherein step c) is performed by applying the first force with a die having an arcuate striking surface.

3. The method of forming a tube to header joint of claim 1 wherein step d) is performed by applying the second force with a die having a substantially planar striking surface.

4. The method of forming a tube to header joint of claim 1 wherein step b) includes further steps comprising:
inserting a locking insert having a peripheral side wall substantially conforming to an inner surface of the tube into the open end of the tube with its side wall abutting the inner surface of the tube;
engaging first cooperating means on the locking insert and on the inner surface of the tube to halt lengthwise insertion of the locking insert;
supporting an outer surface of the tube and the header plate with an exterior support having an inner wall substantially conforming to the outer surface of the tube; and
engaging second cooperating means on the exterior support frame and the outer surface of the tube to halt relative movement between the tube and the exterior support.

5. The method of forming a tube to header joint of claim 4 wherein the first cooperating means comprises:
an enlarged section of the tube adjacent to the tube end and a transverse joining wall between the enlarged section of the tube and the tube; and
the peripheral side wall of the locking insert having a shoulder mating with the transverse joining wall.

6. The method of forming a tube to header joint of claim 5 wherein the second cooperating means comprises the inner wall of the exterior support having a shoulder mating with the transverse joining wall.

7. The method of forming a tube to header joint of claim 4 wherein the first cooperating means comprises:
an inward offset proximate the tube open end; and
the peripheral side wall of the locking insert having a surface mating with the inward offset.

8. A method of forming a tube to header joint comprising the steps of:
a) inserting an open end of a tube lengthwise into a similarly shaped flanged hole in a header plate so that the tube end extends somewhat past the flange;
b) inserting a locking insert having a peripheral side wall substantially conforming to an inner surface of the tube side wall into the open end of the tube with its peripheral side wall abutting the inner surface of the tube side wall;
c) engaging first cooperating means on the locking insert and on the inner surface of the tube side wall to halt lengthwise insertion of the locking insert into the tube;
d) supporting an outer surface of the tube and the header plate with an exterior support having an inner wall substantially conforming to the outer surface of the tube side wall;
e) engaging second cooperating means on the exterior support and on the outer surface of the tube to halt relative movement between the tube and the exterior support; and
f) striking the tube end in the direction of the header plate with a clinched joint forming die thereby forming a clinched joint between the tube and the header.

9. The method of forming a tube to header joint of claim 8 wherein step f) is performed by providing a first die for curling the tube end over the flange and slightly deflecting the flange toward the header plate and away from the hole and providing a second die for flattening the tube end and the flange; and
striking the tube end with the first die to curl the tube end over the flange and slightly deflect the flange away from the hole and then striking the tube end with the second die to flatten the tube end and flange.

10. The method of forming a tube to header joint of claim 8 wherein the first cooperating means between the locking insert and the inner surface of the tube comprises:
an enlarged section of the tube adjacent to the tube open end and a transverse joining wall between the enlarged section of the tube and the tube; and
the peripheral side wall of the locking insert having a shoulder mating with the transverse wall.

11. The method of forming a tube to header joint of claim 10 wherein the second cooperating means comprises the inner wall of the exterior support having a shoulder mating with the transverse joining wall.

12. A tube to header plate joint for joining an aluminum clad steel tube and a header plate in a fluid tight relationship, the joint comprising:
a header plate defining a tube receiving hole having a peripheral flange;
an elongate tube having a side wall and an open end with an outer periphery substantially conforming to the periphery of the tube receiving hole, the tube end being inserted lengthwise through the tube receiving hole;
the tube side wall and peripheral flange being folded one over another in alternating layers transverse the side wall of the tube and parallel to the header plate.
